# EUROPÄISCHE PATENTSCHRIFT

(11) **EP 0 514 681 B1**
(45) Veröffentlichungstag und Bekanntmachung des Hinweises auf die Patenterteilung: **17.01.1996**
(21) Anmeldenummer: 92107007.4
(22) Anmeldetag: 24.04.1992
(51) Int. Cl.: H05B 1/02, A47J 31/047

(54) **Durchlauferhitzer für eine Maschine zur Herstellung von Brühgetränken**
Continuous-flow-heater for a machine for making hot drinks
Chauffe-eau instantané pour une machine qui prépare des boissons échaudés

(30) Priorität: 22.05.1991 DE 4116618
(43) Veröffentlichungstag der Anmeldung: 25.11.1992
(73) Patentinhaber: Braun Aktiengesellschaft, Frankfurt am Main (DE)
(72) Erfinder: Schiebelhuth, Heinz, W-6000 Frankfurt am Main 50 (DE)

(56) Entgegenhaltungen:
- EP-A- 0 186 097
- DE-A- 2 635 848
- US-A- 4 214 148

## Beschreibung

Die Erfindung betrifft einen Durchlauferhitzer nach dem Oberbegriff des Patentanspruchs 1.

Derartige Durchlauferhitzer sind beispielsweise aus der DE-33 29 653 A1 bekannt. Die von den bekannten Durchlauferhitzern neben der Erzeugung und der Zufuhr von heißem Wasser zur Aufbrüheinheit übernommene zweite Aufgabe, nämlich nach Beendigung des Aufbrühvorgangs die mittels einer Warmhalteplatte erfolgende geregelte Warmhaltung des erzeugten Brühgetränks ist Gegenstand mehrerer Schutzrechtsanmeldungen. Das grundsätzliche Problem der geregelten Warmhaltung besteht darin, daß die zum Ausgleich der Wärmeverluste, die das Brühgetränk im Auffangbehälter erfährt zugeführte Wärmemenge, die bei nur einigen 10 Watt liegen kann, ebenfalls vom Durchlauferhitzer erzeugt werden soll. Dieser weist aber eine für den Aufbrühbetrieb erwünschte relativ große Heizleistung auf, die bis über 1000 Watt liegen kann.

Um im zeitlichen Mittel mit einem derartigen Durchlauferhitzer eine vergleichsweise derart geringe Heizleistung zu erzeugen, besteht das Prinzip der geregelten Warmhaltung darin, daß der Durchlauferhitzer für eine relativ kurze Zeit in Betrieb genommen und danach wieder für eine relativ lange Zeit außer Betrieb gesetzt wird. Der Durchlauferhitzer wird dazu in bekannter Weise von einem mit ihm thermisch gekoppelten Thermostat dadurch ein-bzw. ausgeschaltet, daß der Thermostat bei Erreichen seiner Öffnungstemperatur die Spannungsversorgung des Durchlauferhitzers unterbricht bzw. nach entsprechender Abkühlung auf seine Schließtemperatur wieder herstellt.

Dies hat zur Folge, daß dem Brühgetränk von der Warmhalteplatte über den Boden des Auffangbehälters in relativ kurzer Zeit eine relativ große Wärmemenge zugeführt wird, was wiederum dazu führt, daß am Boden des Auffangbehälters ruhende Schichten des Brühgetränks merklich erhitzt werden, deshalb im Auffangbebehälter nach oben steigen und daß abgekühlte Schichten in Richtung Boden des Auffangbehälters absinken. Dadurch entsteht ein durch Kovektion gespeister Kreislauf innerhalb des Auffangbehälters, so daß im Ergebnis das gesamte Brühgetränk in etwa auf der erwünschten Durchschnittstemperatur warmgehalten werden kann. Dieser laufend stattfindende Zyklus von Erwärmung und nachfolgender Abkühlung beeinträchtigt aber insbesondere dann das Aroma des Brühgetränks, wenn es sich dabei um Kaffee handelt.

Zur Verminderung der Beeinträchtigung des Aromas von Kaffee, bei dessen geregelter Warmhaltung sind bereits verschiedene Vorschläge gemacht worden.

So ist für die Warmhaltung kleinerer Kaffeemengen vorgeschlagen worden, neben dem bereits vorhandenen Thermostat einen zweiten Thermostat mit niedrigerer Öffnungstemperatur vorzusehen, der mittels eines sogenannten "Kleinmengenschalters" in den Stromkreis für den Heizkörper des Durchlauferhitzers geschaltet werden kann, wodurch die vom Durchlauferhitzer im zeitlichen Mittel abgegebene Heizleistung verringert wird (vgl. DE-87 01 916 U1). Dabei wird allerdings auch im Aufbrühbetrieb die Heizleistung des Durchlauferhitzers verringert, was zu einer Verlängerung der Dauer des Aufbrühbetriebes führt, ohne daß damit nennenswerte vorteilhafte Auswirkungen auf das Aroma des Brühgetränks erzielt werden.

Ein anderer, wiederum für die Warmhaltung kleinerer Kaffeemengen gedachter Lösungsvorschlag besteht darin, durch Betätigung des Kleinmengenschalters eine Hilfsheizung in Betrieb zu nehmen. Diese beheizt dann den einzigen vorgesehenen Temperaturregler, wenn sich dieser in seiner Offenstellung befindet, was zur Folge hat, daß sich die Zeitspanne, nach der der Temperaturregler wieder in seine Schließstellung zurückkehrt, verlängert, so daß auch hier die im zeitlichen Mittel die an die Warmhalteplatte abgegebene Wärmemenge verringert wird (vgl. EP-0 186 097 Al).

Sowohl bei dem in der DE-87 01 916 U1 als auch in der EP 0 186 097 A1 beschriebenen Durchlauferhitzer muß zur Aktivierung der entsprechenden Schaltmittel für die Warmhaltung kleinerer Brühgetränkemengen neben dem Hauptschalter auch noch der Kleinmengenschalter betätigt werden, ohne dessen Betätigung das Brühgetränk im Warmhaltebetrieb relativ großen Temperaturschwankungen unterworfen ist. Der Benutzer muß also gegebenenfalls zwei Schaltmittel betätigen, was von diesem zum einen immer wieder vergessen wird und zum anderen dem Bedienungskomfort abträglich ist.

Eine nicht nur zur geregelten Warmhaltung kleinerer Mengen eines Brühgetränkes vorgesehene Vorrichtung ist in der DE 35 35 687 A1 offenbart. Im dort beschriebenen Durchlauferhitzer wird dessen Wärmeankopplung an die Warmhalteplatte auf mechanische Weise dadurch beeinflußt, daß über ein Bimetallelement der Abstand zwischen Durchlauferhitzer und Warmhalteplatte derart geregelt wird, daß dieser bei sehr heißem Durchlauferhitzer größer ist als bei weniger heißem Durchlauferhitzer. Dadurch wird die vom Durchlauferhitzer an die Warmhalteplatte abgegebene Wärmemenge verstetigt, d.h., die Maxima der abgegebenen Wärmeleistung werden abgeflacht und die Minima angehoben.

Ein gemeinsamer Nachteil aller vorstehend genannter Maßnahmen zur Verminderung der Aromaschädigung des Brühgetränks besteht darin, daß als Kriterium für die Regelung des Durchlauferhitzer die Temperatur des an ihn thermisch angekoppelten Thermostaten verwendet wird, von der angenommen wird, daß sie die tatsächlichen Temperaturverhältnisse innerhalb des in dem Auffangbehälters sich befindlichen Brühgetränks einigermaßen korrekt wiederspiegelt. Darüber hinaus weisen sämtliche der beschriebenen Thermostaten eine relativ große Hysterese auf, d.h., ihre Öffnungstemperatur, bei der sie die Spannungsversorgung des elektrischen Heizkörpers des Durchlauferhitzers unterbrechen, kann durchaus um 10 oder mehr Grad Celsius über ihrer Schließtemperatur liegen, bei der sie den elektrischen Heizkörper wieder mit der Spannungsversorgung verbinden. Auch diese Eigenschaft der verwendeten Thermostaten trägt wesentlich zu der beschriebenen Unstetigkeit der vom Durchlauferhizter im Warmhaltebetrieb pro Zeiteinheit an die Warmhalteplatte abgegebenen Wärmemengen bei.

Es ist daher Aufgabe der Erfindung, einen Durchlauferhitzer nach dem Oberbegriff des Patentanspruchs 1 so weiter zu bilden, daß er einerseits im Aufbrühbetrieb die volle Heizleistung abgibt und andererseits im Warmhaltebetrieb so geregelt wird, daß die Temperaturschwankungen der Warmhalteplatte und damit die des Brühgetränks möglichst gering gehalten werden.

Für einen Durchlauferhitzer nach dem Oberbegriff des Patentanspruchs 1 erfolgt die Lösung dieser Aufgabe durch die im kennzeichnenden Teil dieses Patentanspruchs aufgeführten Merkmale.

Dadurch, daß zum einen ein von einer Steuerschaltung betätigtes Schaltelement und zum anderen ein mit dem Brühgetränk in gutem Wärmekontakt stehender Temperatursensor vorhanden ist, wird zunächst einmal erreicht, daß zur Steuerung der Warmhaltung des Brühgetränks dessen Temperatur direkt herangezogen wird und nicht - wie aus dem Stande der Technik bekannt - nur aus der Temperatur des Thermostaten abgeleitet wird. Durch das von der Steuerschaltung umgesetzte, erfindungsgemäße Regelprinzip wird zweierlei erreicht. Zunächst einmal entfällt der vom Thermostat verursachte, vorstehend als Hysterese bezeichnete Effekt, da zum einen die Dauer der Heizzyklen so kurz bemessen ist, daß der Thermostat immer geschlossen bleibt. Zum anderen verursacht der Temperatursensor in Verbindung mit dem erfindungsgemäßen, von der Steuerschaltung umgesetzten Regelprinzip selbst keinerlei Hysteresewirkung. So wird nämlich bei Sensortemperaturen kleiner oder gleich einer festlegbaren Schalttemperatur ein sogenannter Heizzyklus ausgeführt, während bei Sensortemperaturen oberhalb der Schalttemperatur das elektrische Schaltelement von der Steuerschaltung offengehalten wird. Weiterhin wird durch die im Warmhaltebetrieb immer wieder stattfindenden relativ kurzen Heizzyklen die Wärmezufuhr zur Warmhalteplatte erheblich verstetigt. Unter der Annahme, daß zu Beginn des Warmhaltebetriebs die Randbedingung gilt, daß die Sensortemperatur über der Schalttemperatur liegt, wird erfindungsgemäß das Schaltelement so lange offen gehalten, bis die Sensortemperatur auf die Schalttemperatur abfällt, bevor der erste Heizzyklus begonnen wird. Auf diese Weise wird sichergestellt, daß gleich zu Beginn des Warmhaltebetrieb ein "Überschießen" der Temperatur des zu Beginn des Warmhaltebetriebs ohnehin warm genugen Brühgetränks verhindert wird, wie es bei den bekannten Durchlauferhitzern bisher der Fall ist.

Bei dem erfindungsgemäßen Durchlauferhitzer wird nach Durchführung eines Heizzyklus das Schaltelement durch die Steuerschaltung - unabhängig von der tatsächlichen Sensortemperatur - für eine bestimmte Totzeit offen gehalten, nach deren Ablauf dann von der Steuerschaltung je nach Sensortemperatur entweder ein weiterer Heizzyklus durchgeführt oder das Schaltelement weiterhin offen gehalten wird. Diese Maßnahme ist besonders vorteilhaft bei Durchlauferhitzern mit großer Wärmleistung, da durch die Totzeit eine zu schnelle Wiederaufwärmung des Brühgetränks verhindert wird, wenn dieses eine deutlich zu tiefe Temperatur hat. Dies tritt zum Beispiel dann ein, wenn der Auffangbehälter nach Fertigstellung des Brühgetränks längere Zeit nicht auf einer Warmhalteplatte sondern beispielsweise auf einem Tisch zur Getränkeentnahme gestanden hat.

Die Weiterbildung des erfindungsgemäßen Durchlauferhitzers nach Anspruch 2 ist insofern vorteilhaft, als die Festlegung des Endes des Aufbrühbetriebs durch den Thermostat selbst festgelegt wird, der ohnehin aus Sicherheitsgründen für einen gattungsgemäßen Durchlauferhitzer vorgesehen werden muß. Wählt man für die festlegbare zweite Zeitdauer, in der sich der Thermostat zum ersten Mal nach Inbetriebnahme des Durchlauferhitzers in geöffnetem Zustand befindet, einen Wert von 40 sec., so kann mit Sicherheit davon ausgegangen werden, daß der Aufbrühbetrieb beendet ist und der Übergang in den Warmhaltebetrieb des Durchlauferhitzers bevorsteht. Derartig lange Öffnungszeiten treten nämlich am Thermostat im Aufbrühbetrieb auch dann nicht auf, wenn das Wasserrohr des Durchlauferhitzers stark verkalkt ist, da das darin enthaltene Wasser relativ schnell wieder zu einer Abkühlung des Thermostat auf seine Schließtemperatur führt.

Die Weiterbildung des erfindungsgemäßen Durchlauferhitzers nach Anspruch 3 bietet den Vorteil, daß wiederum über die Schaltfunktionen des aus Sicherheitsgründen ohnehin notwendigen Thermostat auf eine zunehmende Verkalkung des Wasserrohrs geschlossen werden kann, wobei sich in der Praxis herausgestellt hat, daß man mit Werten von 10 bis 20 Sekunden für die dritte festlegbare Zeitdauer die beginnende Verkalkung des Wasserrohres weder zu spät noch zu frühzeitig anzeigt. Auf diese Weise kann mit der zur Regelung des Durchlauferhitzers im Warmhaltebetrieb ohnehin vorgesehenen Steuerschaltung auch noch eine Verkalkung des Wasserrohrs festgestellt und angezeigt werden.

Die Ausführungsform des erfindungsgemäßen Durchlauferhitzers nach Anspruch 4 bietet den Vorteil, daß der Benutzer der Brühgetränkemaschine die Schalttemperatur und damit auch die Temperatur des warmzuhaltenden Brühgetränks einstellen kann. Es hat sich dabei gezeigt, daß bereits der relativ enge Temperaturbereich zwischen 65° und 85° Celsius allen in der Praxis vorkommenden Erfordernissen gerecht wird.

Wählt man bei einer Heizleistung des Durchlauferhitzers von etwa 1000 Watt für die Öffnungs- und Schließtemperatur des Thermostats und für die Länge der Totzeit Werte nach Anspruch 5, so ergeben sich bei der Dauer eines Heizzyklus von 10 sec. in der Praxis gute Ergebnisse in bezug auf die Warmhaltung und Aromaerhaltung für kleinere Kaffeemengen (bis etwa drei Tassen), während sich bei der Dauer eines Heizzyklus von 12 sec. gute derartige Ergebnisse für größere Kaffeemengen ergeben.

Bildet man den Durchlauferhitzer nach Anspruch 6 weiter, so ist dieser nicht nur an die Warmhaltung sondern auch an die Herstellung kleinerer Brühgetränkemengen, insbesondere Kaffee, bestens angepaßt. Durch die Unterbrechung des Aufbrühvorgangs nach vorzugsweise 60 sec. wird dem Kaffeemehl nämlich die Möglichkeit gegeben, nach einem ersten Kontakt mit heißem Wasser zunächst einmal richtig aufzuquellen, bevor es weiter damit beaufschlagt wird. Die Aufquellung verbessert das Aroma eines Brühgetränks, insbesondere wenn es sich um Kaffee handelt. Bei größeren Brühgetränkemengen ist eine derartige "Brühpause" entbehrlich, da aufgrund des relativ großen Vorrats an kaltem Wasser zum Beispiel Kaffeemehl auch bei nicht unterbrochenem Aufbrühbetrieb genügend Zeit bleibt, um aufzuquellen.

Die Weiterbildung des Durchlauferhitzers nach Anspruch 7 hat den Vorteil, daß dessen Heizkörper im Warmhaltebetrieb äußerst betriebssicher gesteuert wird, was für die bisher bekannten Durchlauferhitzer aufgrund der durch mechanische Ermüdungen gekennzeichneten Thermostaten nicht zutrifft.

Als unempflindliche und preisgünstige Ausführungsform eines Temperatursensors bietet sich ein NTC-Widerstand an (vgl. Anspruch 8), der darüber hinaus eine bei weitem ausreichende Empfindlichkeit seines Widerstandswerts in Abhängigkeit der Temperatur aufweist.

Leitet man gemäß Anspruch 9 aus dem temperaturabhängigen Widerstandswert des NTC-Widerstands eine Spannung ab, die in einem in der Steuerschaltung enthaltenen Komparator mit einer Referenzspannung verglichen wird und weist die Steuerschaltung darüber hinaus noch einen Mikrokontroller aus, der diesen Vergleich und sämtliche andere logische Verknüpfungen überprüft, so erhält man ein genaues und schnelles Ansteuern des Schaltelements. Damit erreicht man bei den heute deutlich gesunkenen Preisen für derartige Mikrokontroller auf recht preiswerte Weise ein äußerst zuverlässiges Arbeiten des Durchlauferhitzers im Warmhaltebetrieb.

Eine Weiterbildung des Durchlauferhitzers nach Anspruch 10 hat den Vorteil, daß der Warmhaltebetrieb dann abgebrochen und damit auch das Gerät zur Herstellung von Brühgetränken außer Betrieb gesetzt wird, wenn anzunehmen ist, daß dessen Benutzer es vergessen hat, dies selbst manuell vorzunehmen. Ist die maximal vorgesehene Dauer des Warmhaltebetriebs innerhalb entsprechend großer Bereiche einstellbar, so kann kaum der Fall eintreten, daß das Gerät mit einem im Auffangbehälter noch warmzuhaltenden Brühgetränk entgegen der eigentlichen Absicht des Benutzers vorzeitig außer Betrieb gesetzt wird.

Bildet man den Durchlauferhitzer nach Anspruch 11 weiter, so ergibt sich zum einen ein guter Wärmekontakt zwischen dem NTC-Widerstand und dem Brühgetränk innerhalb des Auffangbehälters, so daß dessen etwaige Temperaturänderungen sich schnell und direkt auch als Temperaturänderungen des NTC-Widerstandes auswirken, womit die zeitliche Verzögerung zwischen einer Änderung der zu regelnden Temperatur des Brühgetränks und der entsprechenden Änderung der Temperatur des NTC-Widerstandes recht klein gehalten werden kann. Zum anderen ergeben sich durch die einfache, mechanische Ankoppelung des metallischen Körpers an den Auffangbehälter nur geringe konstruktive Änderungen an den bereits bekannten Warmhalteplatten und gar keine derartigen Anforderungen für den Auffangbehälter selbst, was erhebliche Vorteile bei der Aufnahme einer Serienfertigung des erfindungsgemäßen Durchlauferhitzers bietet.

Für den Fall, daß der erfindungsgemäße Durchlauferhitzer nach Anspruch 12 weitergebildet wird, wird erreicht, daß die Steuerschaltung bei leerem oder nicht auf die Warmhalteplatte aufgesetztem Auffangbehälter den Warmhaltebetrieb selbsttätig abbricht. Auf diese Weise wird zum einen Strom gespart, wenn der Benutzer nach Leerung oder längerer Entfernung des Auffangbehälters von der Warmhalteplatte es vergessen hat, die Brühgetränkemaschine abzuschalten. Daneben wird durch diese Ausführungsform der Erfindung auch erreicht, daß neben dem Reglerschalter und einer auch für beide Spannungspole durchführbare Temperatursicherung noch ein weiteres Sicherheitselement zur Verhütung von Bränden vorhanden ist, zumal derartige Brände bei Brühgetränkemaschinen mit Durchlauferhitzern von über 1000 Watt elektrischer Leistung zunehmend eine real existierende Gefahr darstellen.

Bei einem Durchlauferhitzer nach Anspruch 13 wird auf einfache und kostengünstige Weise durch ein Gummi- oder elastisches Kunststoffelement sowohl die notwendige thermische Restkoppelung zwischen Warmhalteplatte und NTC-Widerstand als auch eine sichere Halterung für den beweglichen metallischen Körper erreicht. Außerdem läßt sich das ohnehin preiswerte elastische Element gleichzeitig auch noch zur Abdichtung des unter der Warmhalteplatte liegenden Sockels der Brühgetränkemaschine verwenden.

Eine Weiterbildung des Durchlauferhitzers nach Anspruch 14 hat den Vorteil, daß durch die Wärmeleitpaste ein großflächige Wärmekontaktfläche an der metallischen Hülse erreicht wird, so daß der Temperatursensor bereits auf geringe Temperaturschwankungen reagiert.

Für den Fall, daß der erfindungsgemäße Durchlauferhitzer nach Anspruch 15 weitergebildet wird, wird erreicht, daß, wenn kein Auffangbehälter auf der Warmhalteplatte abgestellt ist, also der Temperatursensor aus dem Gehäuse der Brühgetränkezubereitungsmaschine in seine Ausgangsstellung herausgefahren ist, und wenn die Brühgetränkezubereitungsmaschine noch nicht eingeschaltet ist, auch durch Einschalten des Hauptschalters der Brühgetränkezubereitungsmaschine der Durchlauferhitzer nicht in Betrieb gesetzt wird. Dies wird durch die Offenstellung des Schalters und das dadurch im Mikrokontroller bedingte Aus-Signal erreicht, so daß der Mikrokontroller ein Einschalten der Brühgetränkezubereitungsmaschine nicht zuläßt.

Wird im anderen Falle während der Aufbrühphase der Auffangbehälter von der Warmhalteplatte entfernt, so wird auch hier durch Verschiebung des Temperatursensors der Schalter unterbrochen und ein Signal dem Mikrokontroller zugeführt, der dieses dann derart verarbeitet, daß der Durchlauferhitzer, obwohl der Hauptschalter noch eingeschaltet ist, dennoch abgeschaltet wird. Sobald der Auffangbehälter wieder auf die Warmhalteplatte aufgesetzt wird, leitet durch Kurzschließen des Schalters dieser ein Signal dem Mikrokontroller zu, der dann den Durchlauferhitzer wieder einschaltet und der Brühvorgang fortgesetzt wird.

Befindet sich hingegen die Brühgetränkezubereitungsmaschine bereits im Warmhaltebetrieb, so wird ebenfalls beim Herunternehmen des Auffangbehälters von der Warmhalteplatte durch die axiale Verschiebung des Temperatursensors geöffnet und das Signal dem Mikrokontroller zugeleitet, der dann durch eine im Mikrokontroller vorgesehene Schaltungsanordnung den Durchlauferhitzer beispielsweise 10 Minuten lang noch mit elektrischer Energie versorgt. Wird in dieser Zeit der Auffangbehälter nicht auf die Warmhalteplatte aufgesetzt, so wird durch den Mikrokontroller das Ausschalten der Brühgetränkezubereitungsmaschine veranlaßt.

Wird vor Ablauf dieser Warmhaltezeit der Auffangbehälter wieder auf die Warmhalteplatte aufgesetzt, so bleibt der Durchlauferhitzer weiterhin eingeschaltet und wird durch den Thermostaten temperaturgesteuert. Die zuletzt genannte Steuerung, die sich im Warmhaltebetrieb ergibt, arbeitet unabhängig von der zum Patentanspruch 12 angegebenen Einrichtung, so daß, wenn durch die Restkopplung der Tempratursensor in kürzerer Zeit reagiert, bevor die 10 Minuten Wartezeit abgelaufen ist, dieser die Ausschaltung des Durchlauferhitzers bewirkt.

Im folgenden wird ein Ausführungsbeispiel der Erfindung anhand der Zeichnung näher beschrieben. Es zeigen:
Fig. 1 eine schematische Darstellung einer einen erfindungsgemäßen Durchlauferhitzer aufweisenden Maschine zur Herstellung von Brühgetränken,
Fig. 2 eine Unteransicht des Durchlauferhitzers nach der Fig. 1,
Fig. 3 einen Schnitt durch den Durchlauferhitzer nach der Fig. 2 mit daraufstehendem Auffangbehälter samt seiner Halterung im Sockel der Brühgetränke-Maschine, allerdings um 180° in der Zeichenebene gedreht,
Fig. 4 ein Blockschaltbild der den Heizkörper des Durchlauferhitzers steuernden elektrischen Regelschaltung und
Fig. 5 ein Längsschnitt durch den Temperatursensors nach Fig. 3.

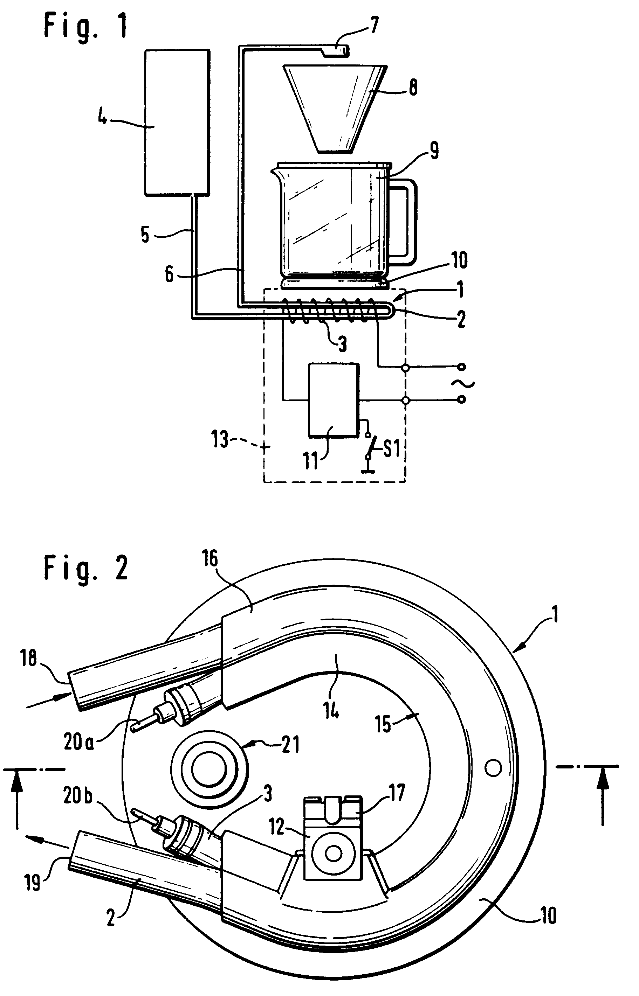

Fig. 1 zeigt in schematischer Weise den Aufbau einer Maschine zur Herstellung von Brühgetränken, in der der erfindungsgemäße Durchlauferhitzer, der als ganzes mit dem Bezugszeichen 1 versehen ist, verwendet werden kann. Dessen wesentlichste Bauteile sind ein Wasserrohr 2 und ein das Wasserrohr 2 beheizender elektrischer Heizkörper 3. Zur Herstellung eines Brühgetränks wird dem Durchlauferhitzer 1 aus einem Vorratsbehälter 4 kaltes Wasser über eine Zuführleitung 5 zugeführt und nach seiner Erhitzung durch den elektrischen Heizkörper 3 durch die Wirkung des dabei entstehenden Dampfdrucks stoßweise über eine Steigleitung 6 und einen sogenannten Brühkopf 7 einer Aufbrüheinheit 8 zugeführt. Die Zuführleitung 5 enthält ein nicht dargestelltes Rückschlagventil, welches dafür sorgt, daß kaltes Wasser aus dem Vorratsbehälter 4 zwar grundsätzlich in das Wasserrohr 2 eintreten kann, daß erhitztes Wasser als Folge des entstehenden Dampfdrucks aber nicht mehr in Richtung Vorratsbehälter 4, sondern ausschließlich zum Brühkopf 7 transportiert werden kann.

Im Inneren der trichterförmig ausgebildeten Aufbrüheinheit 8 kann sich entweder Kaffee oder Tee oder auch eine sonstige Zutat zur Herstellung eines entsprechenden Brühgetränks befinden. Im Verlauf seiner Herstellung fließt das entsprechende Brühgetränk dann in einen Auffangbehälter 9 ab, der seinerseits auf einer Warmhalteplatte 10 steht. Die Warmhalteplatte 10 wird ebenfalls vom Durchlauferhitzer 1 beheizt, so daß dessen elektrischer Heizkörper 3 zum einen das Wasserrohr 2 und zum anderen die Warmhalteplatte 10 beheizt.

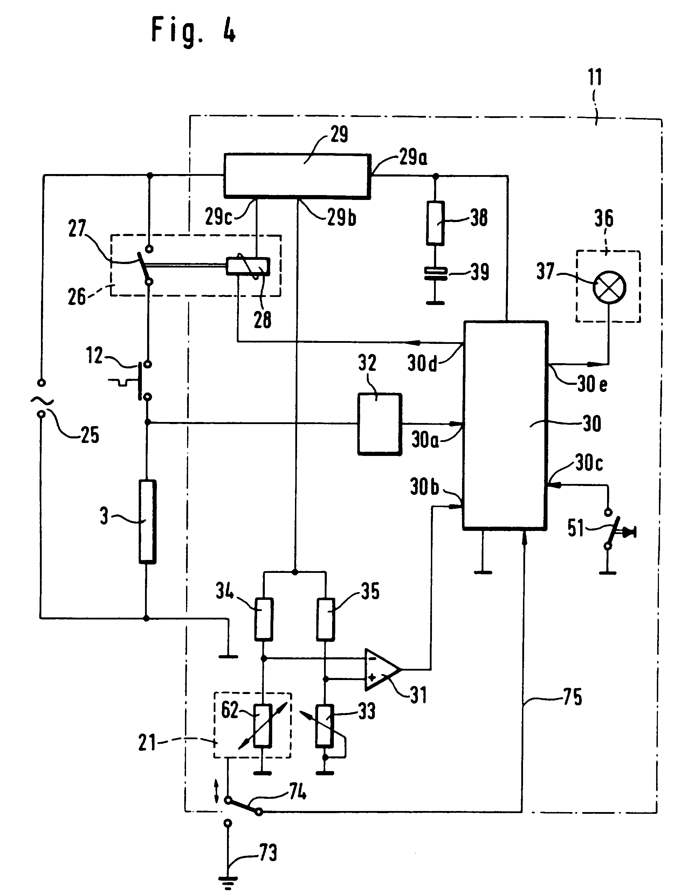

Im sogenannten Aufbrühbetrieb, das heißt, während der Zeit, in der vom Vorratsbehälter 4 immer wieder kaltes Wasser in das Wasserrohr 2 nachfließt, ist die Beheizung des Wasserrohres 2 vorranging, worauf die Heizleistung des elektrischen Heizkörpers 3, die durchaus 1000 Watt oder mehr betragen kann, auch abgestimmt ist. Während des sogenannten Warmhaltebetriebs, das heißt nach Beendigung des Aufbrühvorgangs, ist die Heizleistung des elektrischen Heizkörpers 3 dagegen viel zu groß, da je nach Wärmeisolierung des Auffangbehälters 9 nur Heizleistungen von deutlich unter 100 Watt zur Warmhaltung des Brühgetränks benötigt werden. Der elektrische Heizkörper 3 darf daher im Warmhaltebetrieb - anders als im Aufbrühbetrieb - nur für relativ kurze Zeit in Betrieb genommen werden und muß anschließend wieder für eine längere Zeit wieder außer Betrieb gesetzt werden. Die dafür benötigte Regelschaltung 11, die u.a. einen thermisch mit dem Durchlauferhitzer 1 gekoppelten Thermostaten 12 (vgl. Fig. 2 und 4) enthält, wird durch Schließen eines die Netzspannungsversorgung steuernden Schalters S1 aktiviert. Der schematische Aufbau der Regelschaltung 11 und ihre Wirkungsweise werden bei der Beschreibung der Fig. 4 bis 5 erläutert.

Sowohl die Regelschaltung 11 als auch die Warmhalteplatte 10 sind im nur schematisch durch gestrichelte Linien dargestellten Sockel 13 der Brühgetränke-Maschine gehaltert, wobei der größte Teil der Warmhalteplatte 10 zur Herstellung eines guten Wärmekontakts mit dem Auffangbehälter 9 aber frei liegt.

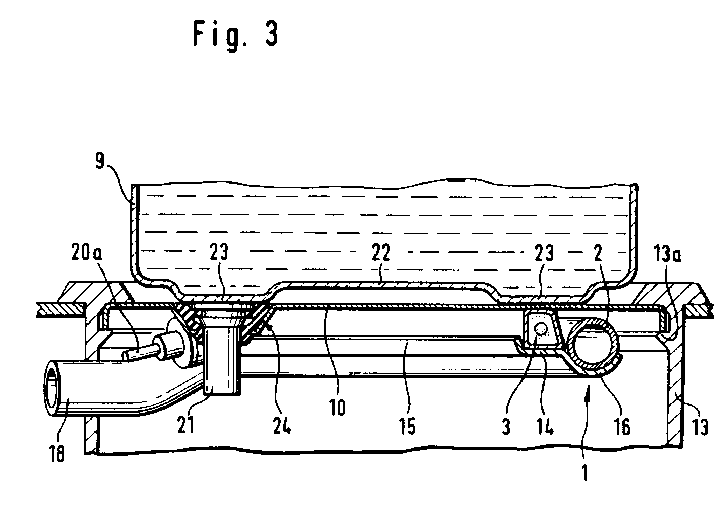

In Fig. 2 sind die wichtigsten Bauteile des Durchlauferhitzers 1 noch einmal im einzelnen abgebildet. Sowohl das Wasserrohr 2 als auch der parallel dazu verlaufende elektrische Heizkörper 3 weisen eine hufeisenförmige Gestalt auf und sind zum einen über einen gut wärmeleitenden Steg 14 (vgl. Fig. 3) nahezu auf ihrem gesamten Verlauf miteinander verbunden. Zm anderen besteht zwischen dem Wasserrohr 2 und dem elektrischen Heizkörper 3 durch ein durchgehendes Blech 15 eine weitere mechanische und thermische Verbindung, wobei das Blech 15 zur weiteren Verbesserung der thermischen und mechanischen Koppelung an seinen beiden Rändern 16 so umgebördelt ist, daß es das Wasserrohr 2 von außen umgreift. Aus dem Blech 15 ist ein Lappen 17 herausgeformt, mit dem der Thermostat 12 in gutem thermischen Kontakt steht und auch mechanisch verbunden ist.

Die Einlaßöffnung 18 des Wasserrohrs 2 ist mit der Zuführleitung 5, dessen Auslaßöffnung 19 mit der Steigleitung 6 verbunden, wobei die Richtung des Wasserflusses durch den Durchlauferhitzer 1 durch in Nähe der beiden Öffnungen 18, 19 angebrachte Pfeile noch einmal verdeutlicht wird. Schließlich weist der elektrische Heizkörper 3 noch elektrische Anschlüsse 20a und 20b auf, die bei Inbetriebnahme der Brühgetränke-Maschine durch die Regelschaltung 11 mit der Netzspannung verbunden werden.

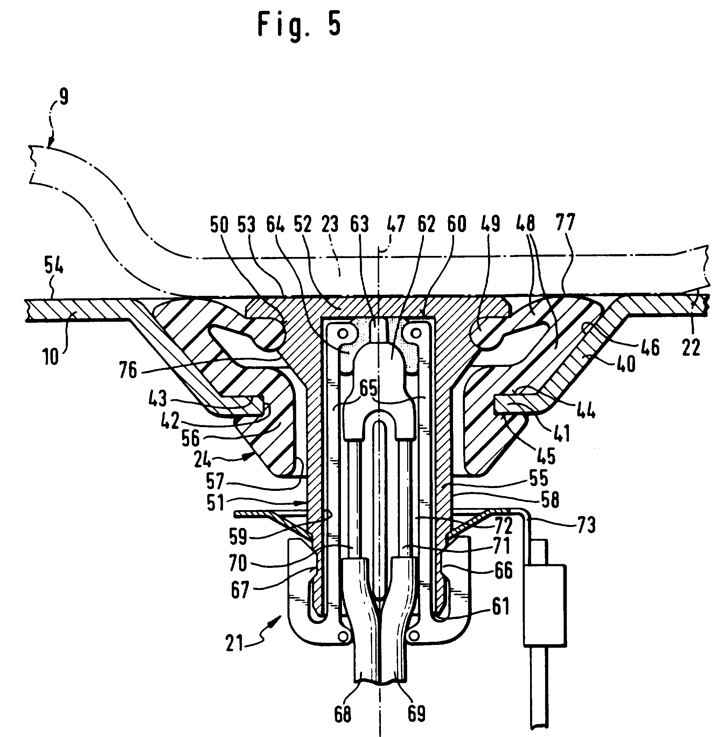

Schließlich ist nur noch in schematischer Weise ein als ganzes mit dem Bezugszeichen 21 bezeichneter Temperatursensor zu erkennen, der sich durch die Warmhalteplatte 10 in Richtung auf den Auffangbehälter 9 hin erstreckt und dessen mechanischer Aufbau bei der Beschreibung der Fig. 5 näher erläutert werden wird. Der Temperatursensor 21 ist in jenem Bereich des hufeisenförmigen Durchlauferhitzers 1 gelegen, in dem die Warmhalteplatte 10 keinen direkten thermischen Kontakt mehr mit dem elektrischen Heizkörper 3 hat. Darüber hinaus steht der Temperatursensor 21 im guten thermischen Kontakt mit dem Auffangbehälter 9, während er aber nur noch eine geringe thermische Restkopplung mit der Warmhalteplatte 10 aufweist. Die Realisierung dieser beiden unterschiedlichen wärmetechnischen Anforderungen wird bei der Beschreibung der Fig. 5 erläutert.

Gemäß Fig. 3 ist die Warmhalteplatte 10 an ihrem Rand mit dem Sockel 13 des Geräts zur Herstellung von Brühgetränken verbunden, was mit Rastlementen 13a erfolgen kann. Da die Warmhalteplatte 10 mit dem elektrischen Heizkörper 3 und dieser wiederum über den Steg 14 und das Blech 15 mit dem Wasserrohr 2 verbunden ist, wird durch die Verbindungsmittel 13a auch der gesamte Durchlauferhitzer 1 im Sockel 13 gehaltert. Auf der Warmhalteplatte 10 steht der zylinderförmige und aus Glas bestehende Auffangbehälter 9, der an seinem Boden eine Einbuchtung 22 aufweist, wodurch zusammen mit seiner Formgebung am Rand des Bodens eine kreisringförmige Auflagefläche 23 für den Aufnahmebehälter 9 auf der Warmhalteplatte 10 entsteht. Die Lage der Auflagefläche 23 ist dabei so gewählt, daß sie über weite Bereiche der Form des elektrischen Heizkörpers 3 folgt. Lediglich in dem durch die hufeisenförmige Gestalt des Durchlauferhitzers 1 bedingten, offenen Bereich zwischen den elektrischen Anschlüssen 20a und 20b des elektrischen Heizkörpers 3, in dem der Temperatursensor 21 liegt, besteht keine Übereinstimmung zwischen dem räumlichen Verlauf der Auflagefläche 23 und dem des elektrischen Heizkörpers 3. Hier berührt vielmehr der durch die Warmhalteplatte 10 von unten hindurchtretende (vgl. Fig. 5) und in dieser in einem in Fig. 3 nur schematisch dargestellten Halteelement 24 gelagerter Temperatursensor 21 die Auflagefläche 23.

Auf diese Weise wird dafür gesorgt, daß zum einen vom elektrischen Heizkörper 3 ausgehende Wärme über die Warmhalteplatte 10 gezielt in den ein Brühgetränk enthaltenden Auffangbehälter 9 gelangt und zum anderen der Temperatursensor 21 über die Auflagefläche 23 ebenfalls in gutem Wärmekontakt mit dem Brühgetränk steht. Wie wiederum anhand der Beschreibung der Fig. 5 noch näher ausgeführt werden wird, ist die Wärmekoppelung zwischen dem Temperatursensor 21 und der Warmhalteplatte 10 wesentlich geringer als die zwischen Temperatursensor 21 und Auflagefläche 23.

Das in Fig. 4 dargestellte Blockschaltbild zeigt als wesentliche Bauelemente zunächst einmal eine Wechselspannungsquelle 25 in deren Stromkreis in Reihe der elektrische Heizkörper 3, der Thermostat 12 und ein als elektromagnetischet Relais ausgebildetes Schaltelement 26, welches im wesentlichen aus einem zwei Schaltstellungen aufweisenden Schalter 27 und einen diesen schließenden Elektromagneten 28 besteht, wobei der Schalter 27 bei nicht aktiviertem Elektromagneten 28 in seiner Offenstellung verharrt. Parallel zu der genannten Reihenschaltung ist eine Einheit 29 zur Erzeugung einer gleichgerichteten Niederspannung geschaltet, die zur Spannungsversorgung (Ausgang 29a) eines Mikrokontrollers 30, zum anderen (Ausgang 29b) zur Spannungsversorgung einer einen Komperator 31 enthaltenden Schaltungsanordnung und schließlich auch noch zur Spannungsversorgung (Ausgang 29c) des Elektromagneten 28 dient.

Vom Mikrokontroller 30 selbst sind in Fig. 4 nur die drei Eingänge 30a, 30b und 30c und die beiden Ausgänge 30d und 30e dargestellt. Dabei nimmt der Eingang 30a das über eine Pegelanpassungseinheit 32 abgeschwächte Signal auf, welches über den Zustand des Thermostaten 12 (Wirkung als offener oder geschlossener elektrischer Schalter) Auskunft gibt. Der Eingang 30b nimmt das vom Komparator 31 abgegebene Signal auf, dessen Pegel von der Temperatur des einen NTC-Widerstand 62 enthaltenden Temperatursensors 21 und dem an einem Soll-Wertgeber 33 vom Benutzer eingestellten Wert abhängt und der in üblicher Weise mit Widerständen 34 und 35 beschaltet ist. Der Eingang 30c des Mikrokontrollers 30 ist mit einem Schalter S1 verbunden, über den das Gerät zur Herstellung von Brühgetränken in Betrieb genommen werden kann.

Der Ausgang 30d des Mikrokontrollers 30 steuert den Elektromagneten 28 des elektromagnetischen Relais 26 an und steuert damit das Schließen und Öffnen des Schalters 27. Der Ausgang 30e schließlich steuert ein auf einer Anzeigeeinheit 36 angebrachtes Anzeigeelement 37 an und steht lediglich stellvertretend für mehrere derartige Ausgänge, die noch weitere, nicht dargestellte Anzeigeelmente ansteuern, die ebenfalls auf der Anzeigeeinheit 36 angebracht sind.

Parallel liegend zur Spannungsversorgung des Mikrokontrollers 30 wird ein Elektrolytkondensator 39 über einen Widerstand 38 dauernd aufgeladen gehalten. Der Elektrolytkondensator 39 dient für den Fall, daß das Gerät zur Herstellung von Brühgetränken vorübergehend vom Netz getrennt werden sollte oder daß ein kurzzeitiger Stromausfall auftritt, als Puffer für die Spannungsversorgung des Mikrokontrollers 30.

In Fig. 5 ist ein Längsschnitt durch den Temperatursensor 21 im Bereich seiner Befestigung an der Warmhalteplatte 10 dargestellt, wobei er sich in seiner von der Auflagefläche 23 des Auffangbehälters 9 in der Zeichnung nach unten gedrückten Stellung befindet. Die aus Stahlblech ausgestanzte und vorzugsweise im Tiefziehverfahren hergestellte Warmhalteplatte 10 weist einen in der Zeichnung nach unten verlaufenden kegelstumpfförmigen Abschnitt 40 als Vertiefung auf, der sich nach unten verjüngt und der an einem Ringbund 41 endet. Der Ringbund 41 bildet eine Öffnung 42, in die ein mit einer Ringnut 43 versehenes Halteelement 24 derart eingeknöpft ist, daß die stirnseitigen Ringflächen 44, 45 den Ringbund 41 hintergreifen, wodurch das Halteelement 24 ortsfest in der Öffnung 42 gehalten wird.

Das Halteelement 24 wird von einem Gummielement oder einem gegen Temperaturresistenten Kunststoff, beispielsweise Silikon oder Teflon, gebildet. Entlang der inneren Wandung 46 des kegelstumpfförmigen Abschnitts 40 verläuft das Halteelement 24 in Fig. 5 nach oben und ist in Höhe der Warmhalteplatte 10 zur Mitte 47 hin derart umgebogen, daß seine Oberkante 77 in dieser Position nicht an der Oberseite 54 der Warmhalteplatte 10 hervorsteht. Der Endbereich 48 des Halteelements 24 bildet die Funktion eines Balges. Das abgeknickte Ende des Balges 48 wird vom einen Ringwulst 49 gebildet, der mit radialer Vorspannung in eine an der topfförmig ausgebildeten Hülse 51 vorgesehene Ringnut 50 eingreift. Zwecks guter Wärmeleitung wurde für die Hülse 51 als Werkstoff vorzugsweise Aluminium gewählt.

Wie aus Fig. 5 deutlich zu erkennen ist, wird der Temperatursensor 21 mit der Hülse 51 von dem Halteelement 24 getragen und wird in der in Fig. 5 dargestellten Position mit einer Spannkraft gegen die Auflagefläche 23 des Auffangbehälters 9 gedrückt, damit ein guter Wärmeübergang von der Auflagefläche 23 des Auffangbehälters 9 zum Temperatursensor 21 geschaffen wird. Damit die Hülse 51 mit einer vorgegebenen Spannkraft gegen die Auflagefläche 23 gedrückt wird, übt der Balg 48 auf die Hülse 51 nach Fig. 5 eine nach oben gerichtete Spannkraft auf. Die Spannkraft wird durch die beim Herunterdrücken des Temperatursensors 21 im Balg 48 entstehende Biegeverformung erreicht. Wird nämlich der Auffangbehälter 9 von der Warmhalteplatte 10 entfernt, so bewegt sich der Temperatursensor 21 infolge der im Balg 48 gespeicherten Biegespannung in der Zeichnung nach oben so weit heraus, bis die Biegespannung im Balk 48 soweit reduziert ist, daß das Eigengewicht des Temperatursensors 21 dieser Restspannung entspricht.

Im Ausgangszustand des Halteelements 24 sind der Ringwulst und der an ihn angrenzende Balgbereich in der Zeichnung nach Fig. 5 nach oben gerichtet und das Halteelement 24 nimmt nahezu die Form ein, die es nach seiner Ausformung bei der Herstellung aufweist. Wenn also kein Druck auf den Bodenbereich 52 der Hülse 51 in der Zeichnung nach unten ausgeübt wird, ragt die mit der Auflagefläche 23 des Auffangbehälters 9 in Kontakt bringbare Anlagefläche 53 an der Oberseite 54 der Warmhalteplatte 10 hervor, was aber in Fig. 5 nicht erkennbar ist, da hier gerade die Auflagefläche des Auffangbehälters 9 den Temperatursensor 29 gegen die im Balg 48 durch die Verformung gebildete Biegekraft nach unten drückt.

An der Stelle, an der die Ringnut 50 an der Hülse 51 ausgebildet ist, verjüngt sich nach Fig. 5 die Hülse 51 im äußeren Mantelbereich kegelförmig nach unten, an den sich dann ein rohrförmiger Abschnitt 55 anschließt. Der von der äußeren Ringnut 43 gebildete Ringabschnitt 56 weist eine konzentrische zum Temperatursensor 21 verlaufende Durchgangsbohrung 57 auf, die mit geringem Abstand zu der Mantelfläche 58 des rohrförmigen Abschnitts 55 der Hülse 51 verläuft, damit die Hülse 51 reibungsfrei in dem Halteelement 24 axial verschiebbar ist. Dies ist deshalb vorteilhaft, da die im Balg 48 bei seiner Verformung entstehenden Biegekräfte, die durch eine axiale Verschiebung des Balges 48 längs der Mitte 47 ermöglichen, verhältnismäßig gering sind. Auf alle Fälle sollte die bei der Verformung des Balges 48 gebildete Spannkraft nicht größer sein als das Gewicht des Auffangbehälters 9, wenn in ihm keine Flüssigkeit aufbewahrt wird; sie muß allerdings immer so groß sein, daß sich, sobald der Auffangbehälter 9 von der Warmhalteplatte 10 entfernt wird, der Temperatursensor 21 in Fig. 5 nach oben bewegt und seine Anlagefläche 53 gegenüber der Oberseite 54 der Warmhalteplatte hervorsteht.

Die Hülse 51 weist nach Fig. 5 eine Sacklochbohrung 59 auf, deren horizontal verlaufender Boden 60 im Bodenbereich 52, also nahe der Anlagefläche 53, ausgebildet ist. In das offenen Ende 61 der Sacklochbohrung 59, das unterhalb des Ringabschnittes 56 des Halteelements 24 angeordnet ist, ist ein als NTC-Widerstand ausgebildetes temperaturempfindliches Element 62 zu weit eingeschoben, daß sein an der Spitze hervorstehender Zapfen 63 am Boden 60 anschlägt und somit einen guten Wärmeübergang vom Bodenbereich 42 zum NTC-Widerstand 62 herstellt.

In Fig. 5 ist an dem temperaturempfindlichen Bereich, also um den Zapfen 63 herum, auf der Oberfläche des NTC-Widerstandes 62 eine Wärmeleitpaste 64 aufgebracht, die in gutem Wärmekontakt mit dem Boden 60 und dem NTC-Widerstand steht. Durch den großflächigen Berührungskontakt reagiert das temperaturempfindliche Element 62 besonders schnell auf Temperaturschwankungen.

An der Wärmeleitpaste 64 sind in Fig. 5 Haltearme 65 angebracht, die sich entlang der Sacklochbohrung 59 erstrecken und die an ihrem offenen Ende 61 den röhrförmigen Abschnitt 55 der Hülse 51 umgreifen, so daß die an ihnen angeformten Rastelemente 66 federnd in der Mantelfläche 58 des rohrförmigen Abschnitts 57 ausgebildete Vertiefungen 67 eingreifen, wodurch das temperaturempfindliche Element 62 sicher auf Anlage an dem Boden 60 in der Sacklochbohrung 59 gehalten wird, wie dies Fig. 5 deutlich zeigt.

Der NTC-Widerstand 62 ist über zwei Leitungen 70, 71 mit dem in Fig. 4 dargestellten Schaltkreis verbunden, in dem die Leitung 70 beispielsweise an die Erde und die Leitung 71 an den negativen Eingang des Komparators 31 angeschlossen ist (Fig. 4). Am Ausgang der Leitungen 70, 71 sind diese mit einer Isolierung 68, 69 versehen, so daß Schmutz und Feuchtigkeit nicht in den von der Sacklochbohrung 59 gebildeten Raum 72 eindringen kann. Weiterhin ist der rohrförmige Abschnitt 55 der Hülse 51 mit einem Erdanschluß 73 verbunden, damit eine Bedienungsperson, falls sie einmal die Anlagefläche 53 des Temperatursensors 21 berührt, nicht unter Spannung gesetzt wird.
Die Wirkungsweise der Steuerschaltung 11 ist folgende:

Nach Inbetriebnahme der Brühgetränkemaschine durch Schließen des Schalters S1 hält der Mikrokontroller 30 über seinen Ausgang 30d das elektromagnetische Relais 26 geschlossen. Da aufgrund des noch kalten Durchlauferhitzers 1 auch der Thermostat 12 als geschlossener elektrischer Schalter wirkt, beheizt der elektrische Heizkörper 3 das Wasserrohr 2 und das Gerät zur Herstellung von Brühgetränken befindet sich im Aufbrühbetrieb. Der Mikrokontroller 30 überwacht an seinem Eingang 30a das vom Zustand des Thermostaten 12 abhängige und über die Pegelanpassungseinheit 32 umgeformte Signal. Für den Fall, daß der Thermostat 12 zum ersten Mal für mindestens 40 sec. geöffnet blieb, wird der Aufbrühbetrieb als beendet angesehen und der Übergäng in den Warmhaltebetrieb vorgenommen.

Sollten während des Aufbrühbetriebs mindestens zwei Mal offene Schaltstellungen des Thermostaten 12 vorgekommen sein, die weniger als 40 sec., aber mindestens 10 bis 20 sec. betragen haben, so steuert der Mikokontroller 30 den Heizkörper 3 weiter im Aufbrühbetrieb, gibt aber an seinem Ausgang 30e ein Signal ab, welches das Anzeigeelement 37 aktiviert, um eine die zeitweilige Öffnung des Thermostaten 12 verursachende Verkalkung des Wasserrohrs 2 anzuzeigen. Das Anzeigeelement 37 bleibt auch dann aktiviert, wenn der Mikrokontroller 30 nach einer über 40 sec. langen Öffnung des Thermostaten 12 schließlich das Ende des Aufbrühbetriebs erkannt hat und den Heizkörper 3 von diesem Zeitpunkt an im Warmhaltebetrieb steuert.

Im Warmhaltebetrieb bleibt der nach entsprechender Abkühlung des Heizkörpers 3 wieder als geschlossener elektrischer Schalter wirkende Thermostat 12 stets in diesem Zustand. Die Steuerung des elektrischen Heizkörpers 3 erfolgt daher allein durch das elektromagnetische Relais 26 und zwar auf folgende Weise:

Hat der Benutzer am Sollwertgeber 33 als gewünschte Temperatur für das warmzuhaltende Getränk, beispielsweise eine zwischen 65°C und 85°C liegende Schalttemperatur eingestellt, so gibt der Temperatursensor 21, der einen NTC-Widerstand 62 enthält, an den Komparator 31 eine Spannung ab, die dafür sorgt, daß nur für Temperaturen des Brühgetränks kleiner oder gleich der Schalttemperatur am Ausgang des Komparators 31 und damit am Eingang 30b des Mikrokontrollers 30 ein Signal anliegt. Liegt ein derartiges Signal an, dann schließt der Mikrokontroller 30 über seinen Ausgang 30c und den Elektromagneten 28 den Schalter 27 für eine Dauer von 10 oder 12 sec., wobei beide Werte am Mikrokontroller 30 mit nicht dargestellten Schaltmitteln eingestellt werden können. Den niedrigeren Wert von 10 sec. für die Dauer eines Heizzyklus wählt man, wenn man kleinere Mengen eines Getränks warmhalten will. Der größere Wert von 12 sec. ist für die Warmhaltung größerer Mengen (im allgemeinen mehr als 3 Tassen) vorgesehen. Unabhängig von der tatsächlichen Temperatur des Temperatursensors 21 legt der Mikrokontroller 30 das elektromagnetische Relais 26 für eine Totzeit von etwa 90 sec. und damit auch den elektrischen Heizkörper 3 still.

Nach Ablauf der Totzeit hängt es von der vom Temperatursensor 21 gemessenen Sensortemperatur ab, ob sofort ein neuer Heizzyklus durchgeführt wird oder ob ein solcher erst später erfolgt. Nur dann, wenn die Sensortemperatur kleiner oder gleich der eingestellten Schalttemperatur ist, wird nämlich ein neuer Heizzyklus durchgeführt.

Als Randbedingung zu Beginn der Steuerung des elektrischen Heizkörpers 3 gilt, daß dann, wenn zu Beginn des Warmhaltebetriebs die vom Temperatursensor 21 ermittelte Sensortemperatur über der eingestellten Schalttemperatur liegt, das elektromagnetische Relais 26 solange in seiner Offenstellung gehalten wird, wie die Sensortemperatur im Verlauf der dadurch eintretenden Abkühlung des Brühgetränks größer als die Schalttemperatur bleibt.

Bei entsprechender Abstimmung der Leistung des Durchlauferhitzers (1000 Watt) mit der Öffnungstemperatur (hier 155°C) und der Schließtemperatur (hier 140°C) des Thermostaten 12, der gewählten Totzeit von 90 sec. und der Dauer des Heizzyklus von 10 oder 12 sec. ist es immer gewährleistet, daß die Temperatur des Thermostaten 12 im Warmhaltebetrieb stets unterhalb seiner Öffnungstemperatur bleibt.

Der Mikrokontroller 30 kann neben der Steuerung des elektrischen Heizkörpers 3 noch weitere Aufgaben übernehmen. So unterbricht der Mikrokontroller 30 bei Wahl des kurzen Heizzyklus von 10 sec. den Aufbrühbetrieb nach 60 sec., um ihn nach einer "Brühpause" von 30 sec. bis zu dessen Ende wieder aufzunehmen.

Weiterhin steuert der Mikrokontroller 30 bei Wahl des kurzen Heizzyklus von 10 sec. etwa 50 sec. nach Beendigung des Aufbrühbetriebs ein weiteres nicht dargestelltes Anzeigeelement an, während dies bei Wahl des längeren Heizzyklus von 12 sec. erst etwa nach 80 sec. erfolgt. Der Wert von 50 bzw. 80 sec. entspricht der sogenannten "Abtropfzeit" für kleine bzw. große Brühgetränkemengen, das heißt der Zeitspanne nach Beendigung des Aufbrühbetriebs, nach deren Ablauf keine nennenswerten Anteile des Brühgetränks mehr von der Aufbrüheinheit 8 in den Auffangbehälter 9 abfließen und das Brühgetränk damit als fertiggestellt betrachtet werden kann.

Der Mikrokontroller 30 kann auch als Zeitschaltuhr programmiert werden, so daß die Inbetriebnahme des Geräts zur Herstellung von Brühgetränken auch selbsttätig ohne Schließen des Schalters S1 erfolgen kann.

Schließlich ist noch anzumerken, daß der Mikrokontroller 30 den Warmhaltebetrieb nach einer vom Benutzer ebenfalls programmierbaren Zeitdauer endgültig dadurch abbricht, daß er den Schalter 27 des elektromagnetischen Relais 26 durchgängig offen hält. Der Schalter 27 wird dann erst durch Einleitung eines neuen Aufbrühvorgangs wieder geschlossen.

Der Schalter 74 in Fig. 4 dient dazu, daß, wenn kein Auffangbehälter 9 auf der Warmhalteplatte 10 abgestellt ist, also der Temperatursensor 21 aus dem Gehäuse 10 der Brühgetränkezubereitungsmaschine in seine Ausgangsstellung herausgefahren ist (nicht in Fig. 5 dargestellt) und wenn die Brühgetränkezubereitungsmaschine noch nicht eingeschaltet ist, auch durch Einschalten des Hauptschalters bei 25, Fig. 4) der Brühgetränkezubereitungsmaschine der Durchlauferhitzer 1 nicht in Betrieb gesetzt wird. Dies wird durch die Offenstellung des Schalters 74 und das dadurch im Mikrokontroller 30 bedingte Aus-Signal erreicht, so daß der Mikrokontroller 30 ein Einschalten der Brühgetränkezubereitungsmaschine nicht zuläßt.

Wird im anderen Falle während der Aufbrühphase der Auffangbehälter 9 von der Warmhalteplatte 10 entfernt, so wird auch hier durch Verschiebung des Temperatursensors 21 der Schalter 74 unterbrochen und ein Signal dem Mikrokontroller 30 zugeführt, der dieses dann derart verarbeitet, daß der Durchlauferhitzer 1, obwohl der Hauptschalter (bei 25 in Fig. 4) noch eingeschaltet ist, dennoch abgeschaltet wird. Sobald der Auffangbehälter 9 wieder auf die Warmhalteplatte 10 aufgesetzt wird (Fig. 5), leitet durch Kurzschließen des Schalters 74 dieser nach Fig. 4 ein Signal dem Mikrokontroller 30 zu, der dann den Durchlauferhitzer 1 wieder einschaltet und der Brühvorgang fortgesetzt wird.

Befindet sich hingegen die Brühgetränkezubereitungsmaschine bereits im Warmhaltebetrieb, so wird ebenfalls beim Herunternehmen des Auffangbehälters 9 von der Warmhalteplatte 10 durch die axiale Verschiebung des Temperatursensors 21 der Schalter 74 geöffnet und dieses Signal dem Mikrokontroller 30 zugeleitet, der dann durch eine im Mikrokontroller 30 vorgesehene Schaltungsanordnung den Durchlauferhitzer 1, beispielsweise 10 Minuten lang, noch mit elektrischer Energie versorgt. Wird in dieser Zeit der Auffangbehälter 9 nicht auf die Warmhalteplatte 10 aufgesetzt, so wird durch den Mikrokontroller 30 das Ausschalten der Brühgetränkezubereitungsmaschine veranlaßt.

Wird vor Ablauf dieser Warmhaltezeit der Auffangbehälter 9 wieder auf die Warmhalteplatte 10 aufgesetzt, so bleibt der Durchlauferhitzer 1 weiterhin eingeschaltet und wird durch den Thermostaten 12 temperaturgesteuert. Die zuletzt genannte Steuerung, die sich im Warmhaltebetrieb ergibt, arbeitet unabhängig von der Restkopplung, wie bereits zuvor beschrieben, so daß, wenn durch die Restkopplung der Tempratursensor 21 in kürzerer Zeit reagiert, bevor die 10 Minuten Wartezeit abgelaufen ist, dieser die Ausschaltung des Durchlauferhitzers 1 bewirkt.

## Patentansprüche

1. Durchlauferhitzer für eine Maschine zur Herstellung von Brühgetränken mit einem Wasserrohr (2) und mit einem elektrisch betriebenen Heizkörper (3), der neben dem Wasserrohr (2) gleichzeitig auch noch eine Warmhalteplatte (10) beheizt, wobei der Brühvorgang dadurch erfolgt, daß aus einem Vorratsbehälter (4) kaltes Wasser über eine Eintrittsöffnung in das Wasserrohr (2) einfließt, dort erhitzt und durch Dampfdruck über eine Austrittsöffnung (7) einer Aufbrüheinheit zugeführt wird im folgenden Aufbrühbetrieb genannt, aus der das Brühgetränk in einen Auffangbehälter (9) abfließt, in dem es durch die Warmhaltplatte (10) nach Abschluß des Aufbrühvorgangs temperaturgeregelt weiter warmgehalten wird im folgenden Warmhaltebetrieb genannt, mit einem Thermostat (12), der elektrisch in Reihe mit dem Heizkörper (3) geschaltet ist und mit dem Durchlauferhitzer in gutem thermischen Kontakt steht, wobei der Thermostat (12) während des Aufbrühbetriebs auch noch bei mäßig verkalktem Wasserrohr stets geschlossen bleibt und erst nach Beendigung des Aufbrühbetriebs seine Öffnungstemperatur erreicht und damit als geöffneter elektrischer Schalter wirkt und nach seiner dadurch bedingten Abkühlung auf seine Schließtemperatur wieder als geschlossener elektrischer Schalter wirkt, wodurch der Beginn des Warmhaltebetriebs festgelegt wird,
**dadurch gekennzeichnet,**
daß elektrisch in Reihe zum Thermostat (12) ein weiteres, eine Offen- und eine Schließstellung aufweisendes elektrisches Schaltelement (26) geschaltet ist, welches im Aufbrühbetrieb stets geschlossen ist und im Warmhaltebetrieb von einer Steuerschaltung (11) geöffnet und wieder geschlossen werden kann, die ihrerseits einen in gutem Wärmekontakt mit dem Brühgetränk stehenden Temperatursensor (21) enthält, daß die Steuerschaltung (11) dann, wenn zu Beginn des Warmhaltebetriebs die Sensortemperatur über einer festlegbaren Schalttemperatur liegt, das Schaltelement (26) solange in seiner Offenstellung hält, wie die Sensortemperatur im Verlauf der dadurch eintretenden Abkühlung des Brühgetränks größer als die Schalttemperatur bleibt, daß die Steuerschaltung (11) im Warmhaltebetrieb immer dann, wenn die Sensortemperatur kleiner oder gleich der Temperatur des Schaltelements (26) ist, das Schaltelement (26) für eine festlegbare erste Zeitdauer, im folgenden Heizzyklus gennant, unabhängig von den während des Heizzyklus auftretenden Sensortemperaturen in seiner Schließstellung hält, wobei der Heizzyklus so kurz bemessen ist, daß dabei die Temperatur des Thermostats (12) stets unterhalb seiner Öffnungstemperatur bleibt und daß die Steuerschaltung (11) nach Beendigung eines Heizzyklus unabhängig von der nach dessen Ende vom Temperatursensor (21) gemessenen Temperatur das Schaltelement (26) öffnet und für eine festlegbare Totzeit offen hält.

2. Durchlauferhitzer nach Anspruch 1,
**dadurch gekennzeichnet**,
daß das Ende des Aufbrühbetriebs von der Steuerschaltung (11) dadurch erkannt wird, daß der Thermostat (12) nach Inbetriebnahme der Brühgetränkemaschine zum ersten Mal mindestens für eine festlegbare zweite Zeitdauer, beispielsweise etwa 40 sec., als geöffneter elektrischer Schalter wirkt.

3. Durchlauferhitzer nach Anspruch 2,
**dadurch gekennzeichnet,**
daß die Steuerschaltung (11) dann, wenn nach Inbetriebnahme der Brühgetränkemaschine der Thermostat (12) während des Aufbrühbetriebs mindestens zweimal für eine ebenfalls festlegbare dritte Zeitdauer, die kürzer ist als die festlegbare zweite Zeitdauer und vorzugsweise zwischen 10 und 20 sec. liegt, als geöffneter elektrischer Schalter wirkt, ein Anzeigelement (37) ansteuert, welches die zunehmende Verkalkung des Wasserrohrs (2) anzeigt.

4. Durchlauferhitzer nach Anspruch 1,
**dadurch gekennzeichnet,**
daß die für die Steuerschaltung (11) maßgebliche Schalttemperatur entweder in verschiedenen Stufen oder stufenlos auf vorzugsweise zwischen 65°C und 85°C liegende Temperaturwerte einstellbar ist.

5. Durchlauferhitzer nach Anspruch 2,
**dadurch gekennzeichnet,**
daß bei einer Heizleistung des Durchlauferhitzers (1) von 1000 Watt ein Thermostat (12) mit einer Öffnungstemperatur von etwa 155°C und einer Schließtemperatur von etwa 140°C verwendet wird, daß für die Dauer eines Heizzyklus an der Steuerschaltung (11) wahlweise zwei Werte von beispielsweise 10 und 12 Sekunden eingestellt werden können und daß für die Totzeit eine Zeitspanne von etwa 90 Sekunden gewählt wird.

6. Durchlauferhitzer nach Anspruch 5,
**dadurch gekennzeichnet,**
daß dann, wenn für den Heizzyklus der niedrigere Wert gewählt worden ist, die Steuerschaltung (11) den Aufbrühbetrieb derart steuert, daß der Aufbrühvorgang nach einer bestimmten Zeitspanne, vorzugsweise 60 sec., einmal für vorzugsweise 30 sec. unterbrochen wird.

7. Durchlauferhitzer nach Anspruch 1,
**dadurch gekennzeichnet,**
daß das Schaltelement (26) aus einem elektromagnetischen Relais besteht.

8. Durchlauferhitzer nach Anspruch 1,
**dadurch gekennzeichnet**,
daß der Temperatursensor (21) einen NTC-Widerstand (62 ) enthält.

9. Durchlauferhitzer nach Anspruch 8,
**dadurch gekennzeichnet,**
daß die Steuerschaltung (11) zur Erkennung, ob die Temperatur des NTC-Widerstands (62) noch oberhalb der Schalttemperatur liegt oder nicht, eine elektrische oder elektronische Baugruppe aufweist, mit der eine vom Widerstandswert des NTC-Widerstands (62) abhängige Spannung erzeugt wird, die in einem Komparator (31) mit einer Referenzspannung verglichen wird, daß die Baugruppe als weiteres wesentliches Bauteil einen Mikrokontroller (30) aufweist, der das Ergebnis dieses Vergleichs und darüber hinaus auch sämtliche andere logische Verknüpfungen überprüft und gegebenfalls die entsprechenden Steuerfunktionen ausführt.

10. Durchlauferhitzer nach Anspruch 9,
**dadurch gekennzeichnet,**
daß der Mikrokontroller (30) nach Ablauf einer vorzugsweise einstellbaren Betriebsdauer im Warmhaltebetrieb diesen unabhängig von der augenblicklichen Sensortemperatur durch durchgängiges Offenhalten des Schaltelements (26) abbricht.

11. Durchlauferhitzer nach Anspruch 8,
**dadurch gekennzeichnet,**
daß der NTC-Widerstand (62) in einem metallischen Körper (51) angeordnet ist, mit dem er im gutem Wärmekontakt steht, daß der metallische Körper (51) seinerseits sich in einer Aussparung (40) der Warmhalteplatte (10) nach oben erstreckt und sich gegen die Wirkung einer Spannkraft nach unten bewegen kann, wobei die Stärke der Spannkraft und das Gewicht des auf der Warmhalteplatte (10) abgestellten Auffangbehälters (9) für das Brühgetränk so aufeinander abgestimmt sind, daß einerseits der metallische Körper (51) gegen die Auflagefläche (23) des Auffangbehälters (9) anliegt und damit ein guter Wärmekontakt zwischen Auffangbehälter (9) und metallischem Körper (51) besteht und andererseits der Auffangbehälter (9) dabei immer noch auf der Warmhalteplatte (10) aufliegt.

12. Durchlauferhitzer nach Anspruch 1,
**dadurch gekennzeichnet,**
daß auch zwischen dem Durchlauferhitzer (1) und dem Temperatursensor (21) eine thermische Restkoppelung besteht, die so bemessen ist, daß bei einer Beheizung der Warmhalteplatte (10) ohne darauf stehendem oder mit leerem Auffangbehälter (9) zuerst der Temperatursensor (21) seine Schalttemperatur überschreitet, bevor der Thermostat (12) seine Öffnungstemperatur erreichen kann und daß die Steuerschaltung (11) den Warmhaltebetrieb abbricht, wenn die Sensortemperatur ununterbrochen länger als eine festlegbare vierte Zeitdauer, beispielsweise 10 Minuten, über der Schalttemperatur liegt.

13. Durchlauferhitzer nach den Ansprüchen 11 und 12,
**dadurch gekennzeichnet,**
daß die durch Wärmeleitung bedingte thermische Restkoppelung zwischen Temperatursensor (21) und Warmhalteplatte (10) durch ein aus Gummi- oder Kunststoff hergestelltes Halteelement (24) erreicht wird, welches einerseits selbst in der Warmhalteplatte (10) gelagert ist und andererseits den beweglichen Temperatursensor (21) führt.

14. Durchlauferhitzer nach Anspruch 12,
**dadurch gekennzeichnet,**
daß der metallische Körper (51) aus einer zum Boden des Auffangbehälters (9) hin verschlossenen Hülse (51) besteht, daß der gute Wärmekontakt zwischen der Hülse (51) und dem NTC-Widerstand (62) durch deren Auffüllen mit einer Wärmeleitpaste (64) hergestellt wird.

15. Durchlauferhitzer nach Anspruch 11,
**dadurch gekennzeichnet,**
daß dem Temperatursensor (21) ein Schalter (74) zugeordnet ist, der mit dem Mikrokontroller (30) über die Leitung (75) verbunden ist, wobei der Temperatursensor (21), wenn er sich bei Herunternehmen des Auffangbehälters (9) von der Warmhalteplatte (10) nach außen verschiebt, den Schalter (74) öffnet und dadurch dem Mikrokontroller (30) ein Signal übermittelt, der dann seinerseits den Durchlauferhitzer (1) sofort oder nach einer vorgegebenen Zeit abschaltet.

## Claims

1. A continuous flow heater for an apparatus for making infusion beverages comprising a water pipe (2) and an electrically operated heating element (3) which, beside the water pipe (2), simultaneously heats a warming plate (10), the brewing process taking place in that cold water from a supply tank (4) flows through an inlet opening into the water pipe (2), is heated there and supplied by vapour pressure through an outlet opening (7) to a brewing unit, hereinbelow referred to as brewing process, from which brewing unit the infusion beverage exits into a storage tank (9) in which, upon completion of the brewing process, it is kept warm by the warming plate (10) in a temperature-controlled fashion, hereinbelow referred to as keep-warm process, comprising a thermostat (12) which is electrically connected in series with the heating element (3) and is in good thermal contact with the continuous flow heater, the thermostat (12) remaining always closed during the brewing process even if the water pipe is moderately calcified, and reaching its opening temperature only upon completion of the brewing process, whereupon it acts as an opened electric switch, while after its consequential cooling to its closing temperature it acts as a closed electric switch again, whereby the commencement of the keep-warm process is determined, **characterized** in that, in electric series connection to the thermostat (12), another electric switch element (26), having an open and a closed position, is connected which is always closed in the brewing process and can be opened and closed again in the keep-warm process by a control circuit (11) which, in turn, comprises a temperature sensor (21) which is in good heat contact with the infusion beverage, in that in the event that, at the commencement of the keep-warm process, the sensor temperature is in excess of a predefinable switching temperature, the control circuit (11) keeps the switching element (26) in its open position for as long as the sensor temperature, in the course of the consequential cooling of the infusion beverage, remains in excess of the switching temperature, in that in the event that the sensor temperature is less than or equal to the temperature of the switching element (26), the control circuit (11) in the keep-warm process always keeps the switching element (26) in its closed posiiton for a predefinable first length of time, hereinbelow referred to as heating cycle, irrespective of the sensor temperatures occurring during the heating cycle, the heating cycle being timed so short that the temperature of the thermostat (12) remains always below the thermostat's opening temperature, and in that, upon completion of a heating cycle, the control circuit (11) opens the switching element (26) and keeps it open for a predefinable dead time, irrespective of the temperature measured by the temperature sensor (21) after the end of the heating cycle.

2. A continuous flow heater as claimed in claim 1, **characterized** in that the end of the brewing process is detected by the control circuit (11) in that, after the beverage maker has been put into operation, the thermostat (12) acts as an opened electric switch for the first time at least for a predefinable second length of time, for example, approximately 40 seconds.

3. A continuous flow heater as claimed in claim 2, **characterized** in that the control circuit (11) actuates a display element (37) indicating the increasing calcification of the water pipe (2) in the event that, upon the start of operation of the beverage maker, the thermostat (12) acts as an opened electric switch during the brewing process at least two times for an also predefinable third length of time which is shorter than the predefinable second length of time and ranges preferably between 10 and 20 seconds.

4. A continuous flow heater as claimed in claim 1, **characterized** in that the switching temperature which is relevant for the control circuit (11) is adjustable either in various steps or infinitely variably to temperature values preferably ranging between 65° C. and 85° C.

5. A continuous flow heater as claimed in claim 2, **characterized** in that, with a heating capacity of the continuous flow heater (1) of 1000 watts, a thermostat (12) having an opening temperature of roughly 155° C. and a closing temperature of roughly 140° C. is used, in that alternatively two values of e.g. 10 and 12 seconds can be adjusted on the control circuit (11) for the duration of a heating cycle, and in that a length of time of roughly 90 seconds is chosen for the dead time.

6. A continuous flow heater as claimed in claim 5, **characterized** in that, when the lower value has been chosen for the heating cycle, the control circuit (11) controls the brewing process in such a manner that the brewing action is interrupted once for preferably 30 seconds after a predetermined length of time, preferably after 60 seconds.

7. A continuous flow heater as claimed in claim 1, **characterized** in that the switching element (26) is an electromagnetic relay.

8. A continuous flow heater as claimed in claim 1, **characterized** in that the temperature sensor (21) comprises an NTC resistor (62).

9. A continuous flow heater as claimed in claim 8, **characterized** in that for detecting whether the temperature of the NTC resistor (62) is still above the switching temperature, the control circuit (11) comprises an electric or electronic module unit, by which a voltage depending on the resistance of the NTC resistor (62) is generated which is compared with a reference voltage in a comparator (31), in that the module unit comprises as a further essential component part a microcontroller (30) which examines the result of this comparison and, in addition, all other logical linkings and, in case of need, performs the appropriate control functions.

10. A continuous flow heater as claimed in claim 9, **characterized** in that, upon expiry of a preferably adjustable operation time in the keep-warm process, the microcontroller (30) discontinues the process by continuously keeping the switching element (26) in its open position irrespective of the instantaneous sensor temperature.

11. A continuous flow heater as claimed in claim 8, **characterized** in that the NTC resistor (62) is arranged in and is in good heat contact with a metallic element (51), in that the metallic element (51), in turn, extends upwardly in a recess (40) of the warming plate (10) and can move downwardly in opposition to the effect of a clamping force, the magnitude of the clamping force and the weight of the storage tank (9) for the infusion beverage placed on the warming plate (10) being conformed to each other such that, on the one hand, the metallic element (51) bears against the abutment surface (23) of the storage tank (9) and, hence, there is good heat contact between the storage tank (9) and the metallic element (51), and that, on the other hand, the storage tank (9) is still in its position placed on the warming plate (10).

12. A continuous flow heater as claimed in claim 1, **characterized** in that there is a residual thermal coupling between the continuous flow heater (1) and the temperature sensor (21) which is rated such that, on heating the warming plate (10) with the storage tank (9) not standing on it or being empty, first the temperature sensor (21) exceeds its switching temperature before the thermostat (12) can reach its opening temperature, and in that the control circuit (11) discontinues the keep-warm process if the sensor temperature remains in excess of the switching temperature uninterruptedly for longer than a predefinable fourth length of time, for example, 10 minutes.

13. A continuous flow heater as claimed in claims 11 and 12, **characterized** in that the residual thermal coupling between temperature sensor (21) and warming plate (10), which is due to heat conduction, is achieved by a retaining element (24) made of rubber or plastic material, which is incorporated in the warming plate (10), on the one hand, and which guides the movable temperature sensor (21), on the other hand.

14. A continuous flow heater as claimed in claim 12, **characterized** in that the metallic element (51) is composed of a sleeve (51) which is closed towards the bottom of the storage tank (9), in that the good heat contact between the sleeve (51) and the NTC resistor (62) is caused by the sleeve being filled with a heat-conduction paste (64).

15. A continuous flow heater as claimed in claim 11, **characterized** in that the temperature sensor (21) is provided with a switch (74) coupled to the microcontroller (30) by the line (75) and, upon displacing outwardly when the storage tank (9) is removed from the warming plate (10), opens the switch (74) and thereby delivers a signal to the microcontroller (30) which, in turn, disconnects the continuous flow heater (1) at once or after a predetermined period of time.

## Revendications

1. Chauffe-eau instantané pour un appareil servant à préparer des infusions, comprenant un tuyau d'eau (2) et un corps de chauffe (3) alimenté électriquement et chauffant en même temps, outre le tuyau d'eau (2), une plaque chauffante (10), le processus d'infusion résultant de l'écoulement d'eau froide d'un réservoir (4) à travers un orifice d'admission dans le tuyau d'eau (2), où cette eau est échauffée, et de l'amenée de l'eau chaude sous l'effet d'une pression de vapeur et à travers un orifice de sortie (7) à une unité d'infusion dans un mode de fonctionnement appelé ci-après mode d'infusion, l'infusion s'écoulant de l'unité d'infusion dans une verseuse (9) ou un récipient récepteur analogue, dans lequel, après la fin du processus d'infusion, l'infusion continue à être maintenue chaude par la plaque chauffante (10), avec régulation de sa température, dans un mode de fonctionnement appelé ci-après mode de maintien à chaud, le chauffe-eau comprenant en outre un thermostat (12) connecté électriquement en série avec le corps de chauffe (3) et en bon contact thermique avec le chauffe-eau, le thermostat (12) restant fermé en permanence pendant le mode d'infusion, même si le tuyau d'eau est modérément entartré, et atteignant seulement sa température d'ouverture après la fin du mode d'infusion, de sorte qu'il agit alors comme un interrupteur électrique ouvert et, à la suite de son refroidissement ainsi produit jusqu'à sa température de fermeture, agissant de nouveau comme un interrupteur électrique fermé, ce qui fixe le début du mode de maintien à chaud,
**caractérisé en ce que**
un autre élément de commutation électrique (26), présentant une position ouverte et une position fermée, est connecté en série avec le thermostat (2), élément de commutation qui est constamment fermé dans le mode d'infusion et peut être ouvert puis refermé dans le mode de maintien à chaud par un circuit de commande (11) qui contient un palpeur de température (21) en bon contact thermique avec l'infusion, que le circuit de commande (11), au cas où la température du palpeur dépasse au début du mode de maintien à chaud une température de commutation pouvant être fixée, maintient l'élément de commutation (26) à sa position ouverte tant que la température du palpeur reste supérieure à la température de commutation au cours du refroidissement ainsi déclenché de l'infusion, que le circuit de commande (11), au cas où la température du palpeur est inférieure ou égale à la température de commutation dans le mode de maintien à chaud, maintient l'élément de commutation (26) pendant une première durée, pouvant être fixée et appelée ci-après cycle de chauffage, à sa position de fermeture, indépendamment des températures de palpeur se produisant pendant le cycle de chauffage, lequel est choisi si court que la température du thermostat (12) reste toujours au-dessous de sa température d'ouverture, et que le circuit de commande (11), après la fin d'un cycle de chauffage, quelle que soit la température mesurée par le palpeur (21) après la fin de ce cycle, ouvre l'élément de commutation (26) et maintient celui-ci ouvert pendant un temps mort pouvant être fixé.

2. Chauffe-eau instantané selon la revendication 1, caractérisé en ce que la fin du mode d'infusion est détectée par le circuit de commande (11) du fait que le thermostat (12) agit, pour la première fois après la mise en marche de l'appareil à préparer des infusions, pendant au moins une deuxième durée pouvant être fixée et qui est par exemple de 40 s environ, comme un interrupteur électrique ouvert.

3. Chauffe-eau instantané selon la revendication 2, caractérisé en ce que le circuit de commande (11) actionne un élément d'affichage (37) qui indique l'entartrage croissant du tuyau d'eau (2) au cas où, après la mise en marche de l'appareil à préparer des infusions, le thermostat (12), pendant le mode d'infusion, agit au moins deux fois comme un interrupteur électrique ouvert pour une troisième durée qui peut également être fixée, laquelle est plus courte que la deuxième durée et de préférence comprise entre 10 et 20 s.

4. Chauffe-eau instantané selon la revendication 1, caractérisé en ce que la température de commutation, laquelle est déterminante pour le circuit de commande (11), est réglable, soit en différents paliers soit de façon continue, à des valeurs de température de préférence comprises entre 65°C et 85°C.

5. Chauffe-eau instantané selon la revendication 2, caractérisé en ce que, pour une puissance de chauffage du chauffe-eau (1) de 1000 watts, on utilise un thermostat (12) ayant une température d'ouverture d'environ 155°C et une température de fermeture d'environ 140°C, que deux valeurs, de 10 et 12 s par exemple, peuvent être réglées pour la durée d'un cycle de chauffage sur le circuit de commande (11) et qu'un laps de temps d'environ 90 s est choisi pour le temps mort.

6. Chauffe-eau instantané selon la revendication 5, caractérisé en ce que, au cas où la valeur plus faible a été choisie pour la durée du cycle de chauffage, le circuit de commande (11) commande le mode d'infusion de manière que le processus d'infusion soit interrompu une fois, de préférence pendant 30 s, après un laps de temps déterminé qui est de préférence de 60 s.

7. Chauffe-eau instantané selon la revendication 1, caractérisé en ce que l'élément de commutation (26) est un relais électromagnétique.

8. Chauffe-eau instantané selon la revendication 1, caractérisé en ce que le palpeur de température (21) contient une résistance CTN (62).

9. Chauffe-eau instantané selon la revendication 8, caractérisé en ce que, pour déterminer si la température de la résistance CTN (21) est encore supérieure ou non à la température de commutation, le circuit de commande (11) comporte un sous-ensemble électrique ou électronique par lequel est générée une tension qui dépend de la valeur ohmique de la résistance CTN (21) et est comparée dans un comparateur (31) avec une tension de référence, que ledit sous-ensemble comprend, comme autre composant essentiel, un microcontrôleur (30) qui vérifie le résultat de cette comparaison, de même que toutes les autres combinaisons logiques, et qui exécute éventuellement les fonctions de commande correspondantes.

10. Chauffe-eau instantané selon la revendication 9, caractérisé en ce que, après expiration d'une durée de fonctionnement qui est de préférence réglable dans le mode de maintien à chaud, le microcontrôleur (30) interrompt ce mode en fonction de la température instantanée du palpeur par le maintien ouvert durable de l'élément de commutation (26).

11. Chauffe-eau instantané selon la revendication 8, caractérisé en ce que la résistance CTN (62) est placée dans un corps métallique (51) avec lequel elle est en bon contact thermique, que le corps métallique (51) s'étend lui-même vers le haut dans un évidement (40) de la plaque chauffante (10) et est déplaçable vers le bas contre l'action d'une force de précontrainte, cette force et le poids de la verseuse (9) de l'infusion, lorsque cette verseuse est placée sur la plaque chauffante (10), étant mutuellement accordés de manière que, d'une part, le corps métallique (51) s'applique contre la surface d'appui ou de pose (23) de la verseuse (9), en établissant ainsi un bon contact thermique entre la verseuse (9) et le corps métallique (51) et que, d'autre part, la verseuse (9) repose encore sur la plaque chauffante (10).

12. Chauffe-eau instantané selon la revendication 1, caractérisé en ce qu'un couplage thermique résiduel existe en plus entre le chauffe-eau (1) et le palpeur de température (21), couplage résiduel qui est conçu pour que, dans le cas d'un chauffage de la plaque chauffante (10) sans que la verseuse (9) soit placée sur elle, ou alors que la verseuse (9) placée sur elle est vide, le palpeur (21) dépasse sa température de commutation avant que le thermostat (12) ne puisse atteindre sa température d'ouverture, et que le circuit de commande (11) interrompt le mode de maintien à chaud au cas où la température du palpeur reste supérieure à la température de commutation de façon ininterrompue pendant un temps plus long qu'une quatrième durée pouvant être fixée et qui est par exemple de 10 minutes.

13. Chauffe-eau instantané selon les revendications 11 et 12, caractérisé en ce que le couplage thermique résiduel entre le palpeur (21) et la plaque chauffante (10), couplage qui est dû à la conduction thermique, est obtenu par un élément de support (24), en caoutchouc ou matière plastique, qui est d'une part supporté lui-même dans la plaque chauffante (10) et guide d'autre part le palpeur de température (21) mobile.

14. Chauffe-eau instantané selon la revendication 12, caractérisé en ce que le corps métallique (51) est une douille (51) fermée vers le fond de la verseuse (9), et que le bon contact thermique entre la douille (51) et la résistance CTN (61) est créé par le remplissage de la douille avec une pâte thermoconductrice (64).

15. Chauffe-eau instantané selon la revendication 11, caractérisé en ce qu'un commutateur (74) est coordonné au palpeur de température (21) et connecté par un conducteur (75) au microcontrôleur (30), l'agencement étant tel que lorsque la verseuse (9) est retirée de la plaque chauffante (10), le palpeur se déplace vers l'extérieur et ouvre le commutateur (74), ce qui provoque la transmission d'un signal au microcontrôleur (30), lequel arrête alors le chauffe-eau (1) immédiatement ou au bout d'un temps préfixé.
